# EUROPÄISCHE PATENTSCHRIFT

(11) **EP 2 301 795 B1**
(45) Veröffentlichungstag und Bekanntmachung des Hinweises auf die Patenterteilung: **03.04.2019**
(21) Anmeldenummer: 10178136.7
(22) Anmeldetag: 22.09.2010
(51) Int. Cl.: B60N 2/66, B60N 2/22, B60N 2/68, A47C 1/032, A47C 1/033, A47C 7/46

(54) **Fahrzeugsitz mit erhöhtem Sitzkomfort**
Vehicle seat with increased seat comfort
Siège de véhicule doté d'un meilleur confort

(30) Priorität: 29.09.2009 DE 102009043298
(43) Veröffentlichungstag der Anmeldung: 30.03.2011
(73) Patentinhaber: GRAMMER AG, 92224 Amberg (DE)
(72) Erfinder: Meiller, Hermann, 92533 Wernberg-Köblitz (DE); Tobehn, Andreas, 91238 Engelthal (DE)
(74) Vertreter: Hannke, Christian

(56) Entgegenhaltungen:
- JP-U- H01 150 032
- US-A- 2 981 314
- US-A- 3 224 808

## Beschreibung

Die Erfindung betrifft einen Fahrzeugsitz mit einem Sitzrahmen zum Vorgeben einer Sitzform, der zumindest einen Rückenlehnenrahmenbereich und einen dazu unbeweglichen Sitzflächenrahmenbereich aufweist, gemäß dem Patentanspruch 1. Herkömmlicher Weise sind Fahrzeugsitze, insbesondere Bahnfahrzeugsitze, derart ausgestaltet, dass sie zum Verstellen einer Rückenlehne einen Schwenkbereich aufweisen, in dem die Rückenlehne schwenkbar gegenüber dem einen Sitzteil des Fahrzeugsitzes angeordnet ist. Auf eine Betätigung eines Knopfes oder eines Hebels hin wird das Rückenlehnenteil nach hinten oder nach vorne verschwenkt, um eine komfortablere Sitzposition für den Sitzbenutzer bzw. Passagier zu erhalten.

Derartig ausgestaltete Bahnfahrzeugsitze weisen den Nachteil auf, dass bei zurückgeschwenkter Rückenlehne eine Beeinträchtigung der Beinfreiheit des dahinter sitzenden Passagiers stattfindet, so dass dieser Passagier unter Umständen nicht den nötigen Sitzkomfort erhalten kann.

Bei dieser Art von Fahrzeugsitzen wird der Rückenlehnenbereich zusammen mit dem dazugehörigen Rahmen als Rückenlehnenrahmenbereich gegenüber dem Sitzflächenrahmenbereich nach hinten oder nach vorne verschwenkt. Alternativ existieren Fahrzeugsitze, insbesondere Bahnfahrzeugsitze, die derart ausgestaltet sind, dass das Sitzteil bzw. ein gepolstertes Sitzteil gegenüber einem darunterliegenden Sitzflächenrahmenbereich nach vorne oder nach hinten verschoben werden kann, wodurch ein Polsterrückenteil in seinem unteren Bereich mit nach vorne oder nach hinten gezogen wird. Mit einem nach vorne ziehenden Polstersitzanteil entsteht somit zwar ein Rückenlehnenanteil mit geringerer Steigung und somit mit erhöhtem Sitzkomfort, jedoch weist der Polsterrückenanteil durch dieses Mitziehen eine nach hinten gerichtete, die Kyphose unterstützende Ausbuchtung auf, die bei vielen Benutzern des Fahrzeugsitzes auch in dieser eher liegenden Stellung eher unerwünscht ist.

Die US 3 224 808 A, US 2 981 314 A und die JP H01 150032 U zeigen jeweils einen Sitzrahmen zum Vorgeben einer Sitzform, wobei der Sitzrahmen einen Rückenlehnenrahmenbereich und einen Sitzflächenrahmenbereich aufweist.

Demzufolge liegt der vorliegenden Erfindung die Aufgabe zugrunde, einen Fahrzeugsitz zur Verfügung zu stellen, der bei einer veränderten Sitzposition, insbesondere mit einer weniger steilen Neigung der Rückenlehne, keine Beeinträchtigung der dahinter sitzenden Person und dem ihr zur Verfügung stehenden Raum zulässt und zugleich einen erhöhten Sitzkomfort derjenigen Person zur Verfügung stellt, die diesen Fahrzeugsitz benutzt.

Diese Aufgabe wird durch die Merkmale des Patentanspruches 1 gelöst. Ein wesentlicher Punkt der Erfindung besteht darin, dass bei einem Fahrzeugsitz, insbesondere einem Bahnfahrzeugsitz, ein Sitzrahmen zum Vorgeben einer Sitzform mit zumindest einem Rückenlehnenrahmenbereich und zumindest einem dazu unbeweglich angeordneten Sitzflächenrahmenbereich ein den Sitzrahmen zumindest teilweise kontaktierendes Polsterelement mit einem Polstersitzanteil und einem Polsterrückenanteil aufweist, wobei der Polstersitzanteil in Sitzlängsrichtung gegenüber dem Sitzflächenrahmenbereich bewegbar ist und der Polsterrückenanteil zumindest teilweise in Sitzlängsrichtung gegenüber dem Rückenlehnenrahmenbereich bewegbar ist. Das Polsterelement weist in einer ersten Bewegungskonfiguration mindest eine erste Umlenkstelle zwischen dem Polstersitzanteil und dem Polsterrückenanteil und in einer zweiten Bewegungskonfiguration eine in oder am Polsterrückenanteil liegende zweite Umlenkstelle auf, wobei das Polsterelement in der ersten Umlenkstelle in einer ersten Richtung umgelenkt ist und in der zweiten Umlenkstelle in entgegengesetzter Richtung umlenkbar ist. Erfindungsgemäß sind der Rückenlehenrahmenbereich und der Sitzflächenrahmenbereich derart unbeweglich zueinander angeordnet, dass eine Winkelstellung des Rückenlehnenrahmenbereichs relativ zu dem Sitzflächenrahmenbereich konstant bleibt, selbst wenn ein Übergang von der ersten Bewegungskonfiguration in die zweite Bewegungskonfiguration durchgeführt wird. Es wird bei einer Bewegung von der ersten Bewegungskonfiguration in die zweite Bewegungskonfiguration das Polsterelement an der ersten Umlenkstelle in die erste Umlenkrichtung umgelenkt. Zur Erzeugung der ersten Umlenkstelle und der zweiten Umlenkstelle ist eine relativ zu dem Rückenlehnenrahmenbereich verschiebbare Sitzschale zwischen dem Polsterelement und dem Sitzrahmen angeordnet. Eine Ausdehnung der Sitzschale endet in Höhenrichtung im Bereich der zweiten Umlenkstelle und gibt im Wesentlichen die Form des Polstersitzanteiles gegenüber dem Polsterrückenanteil im unteren Bereich, also bis auf Höhe eines Lendenwirbelbereiches, vor. Diese Sitzschale ist unterhalb des Polsterelementes und damit unterhalb des Polstersitzanteiles angeordnet und gegenüber dem Sitzflächenrahmenbereich nach vorne und auch nach hinten verschiebbar.

Die zweite Umlenkstelle ist als imaginäre oder reale Achse innerhalb des Polsterelementes bezüglich des Sitzrahmens verschiebbar, was bedeutet, dass die Achse sich bei einem Nachvorneverschieben des Polstersitzanteiles im Bereich des Polsterrückenanteiles von dem Rückenlehnenrahmenbereich weg nach vorne bewegt und hierdurch eine verstärkte Lordose-Stellung des Polsterelementes entsteht. Die hierdurch entstehende Auswölbung des Polsterelementes in diesem Rückenlehnenbereich führt zu einem nach hinten geneigten Polsterrückenanteil oberhalb der zweiten Umlenkstelle, wobei eine derartige Umlenkung eine Loslösung des Polsterelementes, insbesondere im unteren Bereich des Polsterrückenanteiles, von dem Rückenlehnenrahmenbereich bewirkt, wobei sich bei einem Nachvorneziehen des Polstersitzanteiles ebenso eine Loslösung des Polsterelementes im mittleren Rückenbereich und teilweise im Schulterbereich der Rückenlehne von dem Rückenlehnenrahmenbereich ergibt, und wobei durch ein Nachvorneverschieben des Polstersitzanteiles, wie es mittels der Sitzschale geschieht, in diesem Bereich der Polsterrückenanteil sich rückseitig von dem Rückenlehnenrahmenbereich in seiner Kontaktierung löst und somit eine nach vorne gerichtete Auswölbung in einem Bereich, der auch als Lordose unterstützender Bereich bezeichnet wird, entsteht, wobei durch dieses Nachvorneschieben der Sitzschale oberhalb des lordoseunterstützenden Bereiches hingegen durch das Nachvorneziehen des Polsterelementes in einem Sitzflächenbereich und in einem unteren Rückenlehnenbereich jedoch eine Rückenlehne mit geringerer Neigung geschaffen wird. Eine dritte Umlenkstelle, um die das Polsterelement in eine mit der ersten Richtung übereinstimmende dritte Richtung umlenkbar ist, liegt im Polsterrückenanteil. Diese dritte Umlenkstelle ist im Schulterbereich des Polsterrückenanteils angeordnet und gibt die nach hinten gerichtete Einbuchtung des Polsterelementes im Schulterbereich oder oberhalb des Schulterbereiches wieder.

Der Polsterrückenanteil ist für den Übergang zwischen den beiden Bewegungskonfigurationen in Höhenrichtung verschiebbar. Ein Abstand in Höhenrichtung von dem oberen Ende der Sitzschale, welches im Bereich der zweiten Umlenkstelle liegt, zu dem unteren Ende der Sitzschale, an dem die Sitzschale eine Umlenkung in die Horizontale erfährt, ist zwischen 5 cm und 50 cm, bevorzugt zwischen 10 cm und 30 cm, wobei die zweite Umlenkstelle achsenartig durch die Oberkante der Sitzschale ausgebildet ist.

Durch eine derartige Ausgestaltung des Polsterelementes zusammen mit den Umlenkstellen ist es vorteilhaft möglich, dass eine lordoseunterstützende Position des Polsterelementes im unteren Bereich des Polsterrückenanteiles auch bei einer weniger steilen Neigung des Rückens einer Person erhalten wird. Denn durch ein Nachvorneziehen des Polstersitzanteiles wird der untere Teil des Polsterrückenanteiles mit nach vorne gezogen. Dies entspricht dem Übergang von der ersten Bewegungskonfiguration in die zweite Bewegungskonfiguration. Da in der zweiten Bewegungskonfiguration eine Umlenkung des Polsterelementes, wie sie im übrigen auch bereits schon in der ersten Bewegungskonfiguration vorliegen kann, um die zweite Umlenkstelle mit einer zweiten Umlenkrichtung vorliegt, entsteht hierdurch eine lordoseunterstützende nach vorne gerichtete Auswölbung des Polsterrückenanteiles, die sich vorteilhaft als Stütze im Lendenwirbelbereich der den Fahrzeugsitz benutzenden Person geltend macht. Hierfür ist das Polsterelement vorzugsweise einstückig ausgebildet und erstreckt sich von dem Sitzanteil bis über den Rückenanteil des Fahrzeugsitzes.

Eine derartige Umlenkung um eine zweite Umlenkstelle hat zudem zur Folge, dass die den Fahrzeugsitz benutzende Person oberhalb des Lendenwirbelbereiches mit einer größeren nach hinten ausgerichteten Neigung im Fahrzeugsitz sitzt und somit eine mehr liegende Position einnimmt. Dies liegt daran, dass das Polsterelement durch die Umlenkung um die zweite Umlenkstelle einen mittleren Rückenbereich und einen Schulterbereich aufweist, in welchem das Polsterelement wieder langsam - von unten nach oben betrachtet - zurück auf den Rückenlehnenrahmenbereich geführt wird.

Voraussetzung für eine derartige Umlenkung ist eine Loslösung des Polsterelementes, insbesondere im unteren Bereich des Polsterrückenanteiles, von dem Rückenlehnenrahmenbereich, wobei sich bei einem Nachvorneziehen des Polstersitzanteiles ebenso eine Loslösung des Polsterelementes im mittleren Rückenbereich und teilweise im Schulterbereich der Rückenlehne von dem Rückenlehnenrahmenbereich ergibt.

Weiterhin ist eine derartige Ausbildung des Fahrzeugsitzes deshalb vorteilhaft, da der Rückenlehnenrahmenbereich und der Sitzflächenrahmenbereich unbeweglich zueinander angeordnet sind, also in ihrer Winkelstellung zueinander nicht verändert werden, selbst wenn ein Übergang von der ersten Bewegungskonfiguration in die zweite Bewegungskonfiguration durchgeführt wird. Somit wird die Raumfreiheit des hinter dem Fahrzeugsitz sitzenden Fahrzeugpassagiers nicht beeinträchtigt, welches der Fall wäre, wenn die Rückenlehne - wie in dem Stand der Technik geschehen - nach hinten geschwenkt werden müsste.

Die erste und die zweite Umlenkstelle sind vorzugsweise als sich in Fahrzeugsitzbreitenrichtung erstreckende imaginäre Achsen ausgebildet, wobei das Polsterelement im Bereich der zweiten Umlenkstelle den lordoseunterstützenden Bereich aufweist. Der lordoseunterstützende Bereich kann sowohl in der ersten als auch in der zweiten Bewegungskonfiguration vorliegen.

Alternativ kann in der ersten Bewegungskonfiguration, also bei eingezogenem Polstersitzanteil, gegenüber dem Sitzflächenrahmenbereich, eine lineare Ausbildung des Polsterrückenanteiles im Bereich der Lendenwirbel einer Person oder eine Kyphose unterstützende, nach hinten gerichtete Einwölbung des Polsterrückenanteiles vorliegen.

Die zweite Umlenkstelle ist als imaginäre oder reale Achse innerhalb des Polsterelementes bezüglich des Sitzrahmens verschiebbar. Dies bedeutet, dass die Achse sich bei einem Nachvorneverschieben des Polstersitzanteiles im Bereich des Polsterrückenanteiles von dem Rückenlehnenrahmenbereich weg nach vorne bewegt und hierdurch eine verstärkte Lordose-Stellung des Polsterelementes entsteht. Die hierdurch entstehende Auswölbung des Polsterelementes in diesem Rückenlehnenbereich führt zu einem nach hinten geneigten Polsterrückenanteil oberhalb der Umlenkstelle.

Die zweite Umlenkstelle ist demzufolge in eine in Sitzlängsrichtung gesehene Richtung verschiebbar.

Auch die erste Umlenkstelle ist bezüglich des Sitzrahmens in Sitzlängsrichtung verschiebbar ausgebildet. Dies ergibt sich dadurch, dass bei Nachvorneziehen des Polstersitzanteiles zugleich die weiter unten liegende erste Umlenkstelle, welche den Übergang von dem Polstersitzanteil zu dem Polsterrückenanteil bildet, unter Bezugnahme auf den Sitzrahmen mit nach vorne gezogen wird. Gleichwohl bleibt die Umlenkrichtung des Polsterelementes in der ersten Umlenkstelle beibehalten und ist demzufolge auch weiterhin entgegengesetzt zu der Umlenkrichtung des Polsterelementes im Bereich der zweiten Umlenkstelle.

Eine Verschiebung des Polsterelementes im Bereich des Polstersitzanteiles gegenüber dem Sitzflächenrahmenbereich kann beispielsweise durch verschiedenartige Ausbildungen an der Unterseite des Polstersitzanteiles und der Oberseite des Sitzflächenrahmenbereiches geschehen. Hierfür weist die Unterseite des Polstersitzanteiles beispielsweise zwei parallel verlaufende Schienen und die Oberseite des Sitzflächerahmenbereiches zwei diese beiden Schienen umgreifende Führungsschienen auf.

Es ist die Ausbildung einer Sitzschale vorgesehen, deren Ausdehnung in Höhenrichtung im Bereich der zweiten Umlenkstelle endet und im Wesentlichen die Form des Polstersitzanteiles gegenüber dem Polsterrückenanteil im unteren Bereich, also bis auf Höhe des Lendenwirbelbereiches, vorgibt. Diese Sitzschale ist unterhalb des Polsterelementes und damit unterhalb des Polstersitzanteiles angeordnet und ist gegenüber dem Sitzflächenrahmenbereich nach vorne und auch nach hinten verschiebbar. Wiederum kann dies mittels Führungsschienen zwischen der Sitzschale und dem Sitzflächenrahmenbereich geschehen.

Durch Ausbildung einer derartigen Sitzschale wird die zweite Umlenkstelle automatisch bei nach vorne Schieben der Sitzschale mit nach vorne verschoben. Dies trifft auch auf die erste Umlenkstelle zu. Hierdurch wird das Polsterelement in eine lordoseartige, nach vorne gerichtete Auswölbung gebracht. Die zweite Umlenkstelle ist achsenartig ausgebildet durch die Oberkante der Sitzschale ausgebildet.

Eine dritte Umlenkstelle ist im Polsterrückenanteil ebenso angeordnet. Um diese dritte Umlenkstelle ist das Polsterelement in eine mit der ersten Richtung übereinstimmende dritte Umlenkrichtung umlenkbar. Die dritte Umlenkstelle ist im Schulterbereich des Polsterrückenanteiles ausgebildet und gibt somit die nach hinten gerichtete Einbuchtung des Polsterelementes im Schulterbereich oder oberhalb des Schulterbereiches wieder. Hierdurch kann die Kopfstellung eine nach vorne geneigte Stellung sein.

Erfindungsgemäß ist der Polsterrückenanteil für den Übergang zwischen den beiden Bewegungskonfigurationen in Höhenrichtung verschiebbar ausgebildet. Da bei einem Nachvorneziehen des Polstersitzanteiles ein Nachvorneziehen des Polsterrückenanteiles geschieht und dieser Polsterrückenanteil hierdurch eine Verlängerung erfährt, muss das Polsterelement im Bereich des Polsterrückenanteiles entweder dehnbar sein oder gegenüber dem Rückenlehnenrahmenbereich verschiebbar sein. Vorteilhaft kann hierfür bei einer Verschiebung des Polsterrückenanteiles dieses im oberen Bereich zweiteilig ausgebildet sein, so dass ein gewisser Anteil des Polsterrückenanteiles, insbesondere im Kopfbereich, gegenüber dem Rückenlehnenrahmenbereich fixiert bleibt.

Weitere vorteilhafte Ausführungsformen ergeben sich aus den Unteransprüchen.

Vorteilhafte Zweckmäßigkeiten sind der nachfolgenden Beschreibung in Verbindung mit der Zeichnung zu entnehmen. Hierbei zeigen:
- Fig. 1: in einer ersten schematischen Darstellung ein Fahrzeugsitz gemäß einer Ausführungsform der Erfindung in einer ersten Bewegungskonfiguration und
- Fig. 2: in einer schematischen Darstellung den Fahrzeugsitz gemäß der ersten Ausführungsform der Erfindung in einer zweiten Bewegungskonfiguration.

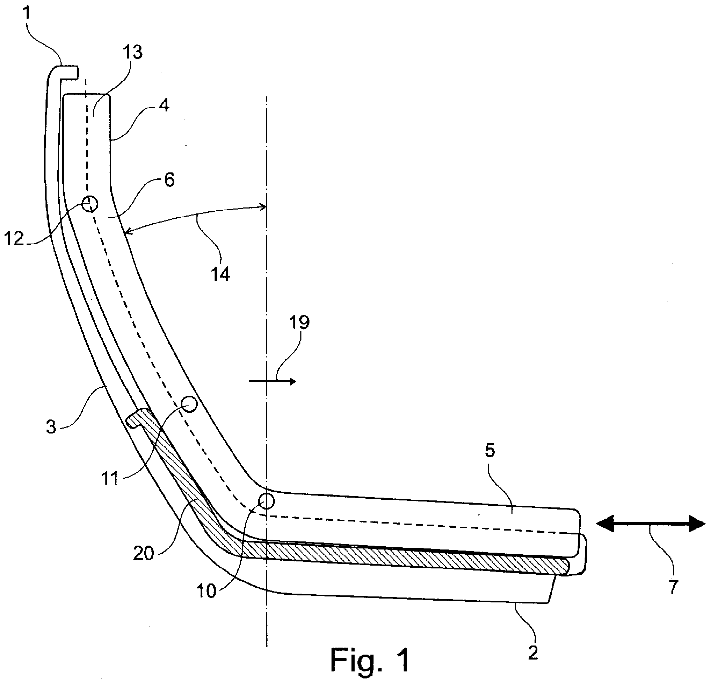

In Fig. 1 ist in einer schematischen Darstellung ein erfindungsgemäßer Fahrzeugsitz gemäß einer Ausführungsform der Erfindung in einer ersten Bewegungskonfiguration wiedergegeben. Bei dieser Bewegungskonfiguration befindet sich ein Polsterelement 4 gegenüber einem Sitzrahmen 1 in kontaktierender Stellung.

Ein Sitzrahmen 1 weist einen Sitzflächenrahmenbereich 2 und einen Rückenlehnenrahmenbereich 3 auf, wobei ein vorzugsweise einstückig ausgebildetes Polsterelement 4 einen dem Sitzflächenrahmenbereich 2 zugeordneten Polstersitzanteil 5 und einen dem Rückenlehnenrahmenbereich 3 zugeordneten Polsterrückenanteil 6 aufweist.

In dieser ersten Bewegungskonfiguration ist der Polsterrückenanteil 6 mit einem Winkel 14 gegenüber der Vertikalen angeordnet.

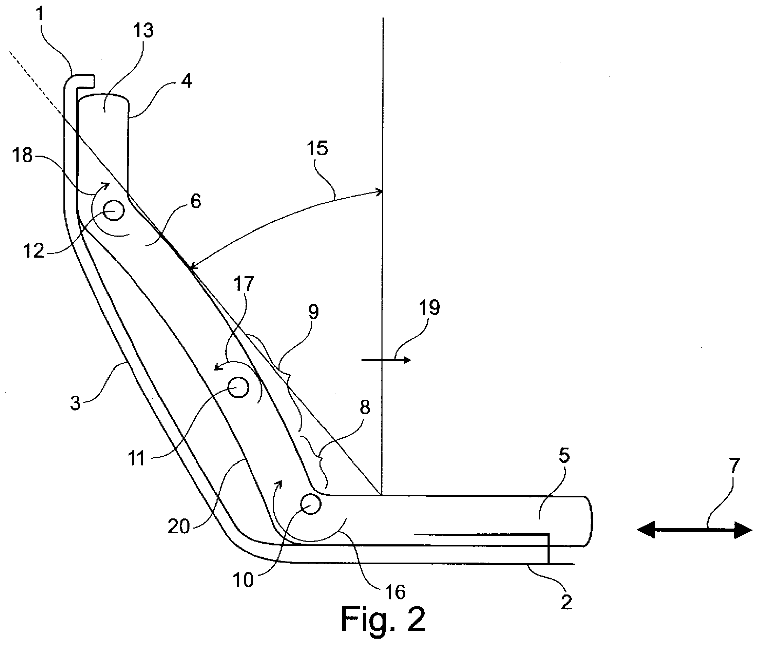

Der Polstersitzanteil 5 kann gegenüber dem Sitzflächenrahmenbereich 2 nach vorne und nach hinten verschoben werden, wie es durch das Bezugszeichen 7 angedeutet wird. Unter Bezugnahme auf Fig. 2, in welcher der Fahrzeugsitz in einer zweiten Bewegungskonfiguration gezeigt wird, ist in einem ersten Polsterelementbereich 8 eine erste Umlenkstelle 10, die imaginär ausgebildet sein kann, und in einem Polsterelementbereich 9 eine zweite Umlenkstelle 11, die ebenso imaginär ausgebildet sein kann, gezeigt. In einem weiteren Polsterelementbereich ist eine dritte Umlenkstelle 12 ausgebildet.

Ein Kopfbereich 13 des Polsterelementes 4 im Bereich des Polsterrückenanteiles 6 kann mit dem Rückenlehnenrahmenbereich 3 an seiner Rückseite fixiert sein. Demgegenüber ist unterhalb dieses Kopfbereiches 13 und damit unterhalb der dritten Umlenkstelle 12 der Polsterrückenanteil 6 nicht gegenüber dem Rückenlehnenrahmenbereich 3 fixiert angeordnet.

Durch ein Nachvorneverschieben des Polstersitzanteiles 5 mittels einer Sitzschale 20, kann sich ein Bereich des Polsterrückenanteils 6 rückseitig von dem Rückenlehnenrahmenbereich 3 in seiner Kontaktierung lösen und somit eine nach vorne gerichtete Auswölbung in dem Bereich 9, der auch als Lordose unterstützender Bereich bezeichnet wird, bilden. Hierdurch findet eine Umlenkung des Polsterelementes 4 um die zweite Umlenkstelle 11, die als Achse ausgebildet sein kann, statt. Dies wird durch das Bezugszeichen 17 mit dazugehöriger Pfeilrichtung angedeutet. Demgegenüber steht eine entgegengesetzte Umlenkrichtung 16 für die Umlenkung des Polsterelementes 4 im Bereich der ersten Umlenkstelle 10, die ebenso als imaginäre Achse ausgebildet sein kann.

Diese Umlenkrichtung 16 stimmt mit einer dritten Umlenkrichtung 18 im Bereich der dritten Umlenkstelle 12, die ebenso als imaginäre Achse ausgebildet sein kann, überein.

Sämtliche imaginäre oder reale Achsen sind als in Fahrzeugsitzbreitenrichtung verlaufende Achsen zu betrachten.

Selbstverständlich können die Achsen in Fahrzeugbreitenrichtung endliche Ausdehnungen haben, so dass in Fahrzeugbreitenrichtung betrachtet lediglich Teile des Polsterelementes nach vorne oder nach hinten bewegt werden und beispielsweise links- und rechtsseitig angeordnete Randbereiche weiterhin in Kontakt mit dem Sitzrahmen 1 gehalten werden. Durch ein Nachvorneziehen der Sitzschale 20 wird die Umlenkstelle 11 ebenso nach vorne verschoben, was durch den Pfeil 19 dargestellt wird. Hierdurch entsteht die starke Lordose unterstützende Auswölbung des Polsterelementes 4 in diesem Bereich. Oberhalb des lordoseunterstützenden Bereiches 9 hingegen wird durch das Nachvorneziehen des Polsterelementes 4 im Sitzflächenbereich und im unteren Rückenlehnenbereich jedoch eine Rückenlehne mit geringerer Neigung geschaffen. Hierdurch kann sich die den Fahrzeugsitz benutzende Person mehr nach hinten lehnen und erfährt einen höheren Sitzkomfort. Angedeutet wird dies durch einen Winkel 15, der gegenüber dem in der ersten Bewegungskonfiguration gemäß Fig. 1 wiedergegebenen Winkel 14 größer ausgebildet ist.

Vorzugsweise betragen die Winkelunterschiede zwischen der ersten und zweiten Bewegungskonfiguration zwischen 5º und 50º.

Ein Abstand in Höhenrichtung von dem oberen Ende der Sitzschale 20, welches im Bereich der zweiten Umlenkstelle 11 liegt, zu dem unteren Ende der Sitzschale 20, an dem die Sitzschale 20 eine Umlenkung in die Horizontale erfährt, ist zwischen 5 cm und 50 cm, bevorzugt zwischen 10 cm und 30 cm.

Aus den oben gemachten Darstellungen wird deutlich, dass der Grundgedanke der Erfindung, welche sich in der Umlenkung des Polsterelementes an verschiedenen Umlenkstellen widerspiegelt, vorteilhaft einen höheren Sitzkomfort für die den Fahrzeugsitz benutzende Person und zugleich einen höheren Sitzkomfort für die hinter diesem Fahrzeugsitz sitzende Person, wie beispielsweise im Personenwagen eines Bahnwaggons, zur Folge hat.

Sämtliche vorgenannten Ausführungen hinsichtlich des Fahrzeugsitzes können selbstverständlich auch auf einen Bürostuhl oder andere derartige Stühle Anwendung finden. Insbesondere die hinsichtlich der Mechanik des Sitzes gemachten Ausführungen sind ebenso auf einen Bürostuhl anwendbar. Auch sind die Patentansprüche, welche sich auf einen Fahrzeugsitz richten, auch übertragen auf einen Bürostuhl zu lesen. Die im Zusammenhang mit dem Fahrzeug an sich gemachten Ausführungen, auch hinsichtlich des Fahrzeugsitzes, finden somit bei der Anwendung des Erfindungsgegenstandes auf den Bürostuhl keine Anwendung.

### Bezugszeichenliste

- 1: Sitzrahmen
- 2: unbeweglicher Sitzflächenrahmenbereich
- 3: Rückenlehnenrahmenbereich
- 4: Polsterelement
- 5: Polstersitzanteil
- 6: Polsterrückenanteil
- 7: Sitzlängsrichtung
- 8: Polsterelementbereich
- 9: Lordose unterstützender Bereich
- 10: erste Umlenkstelle
- 11: zweite Umlenkstelle
- 12: dritte Umlenkstelle
- 13: Kopfbereich
- 14: Winkel
- 15: Winkel
- 16: erste Richtung
- 17: zweite entgegengesetzte Richtung
- 18: dritte Richtung
- 19: Pfeil
- 20: Sitzschale

## Patentansprüche

1. Fahrzeugsitz umfassend einen Sitzrahmen (1) zum Vorgeben einer Sitzform, wobei der Sitzrahmen (1) zumindest einen Rückenlehnenrahmenbereich (3) und einen dazu unbeweglichen Sitzflächenrahmenbereich (2) aufweist,
wobei der Fahrzeugsitz weiter aufweist:
- ein den Sitzrahmen (1) zumindest teilweise kontaktierendes Polsterelement (4), welches zumindest einen Polstersitzanteil (5) aufweist, der in Sitzlängsrichtung (7) gegenüber dem Sitzflächenrahmenbereich (2) bewegbar ist, und einen Polsterrückenanteil (6) aufweist, der zumindest teilweise in Sitzlängsrichtung (7) gegenüber dem Rückenlehnenrahmenbereich (3) bewegbar ist, wobei das Polsterelement (4) in einer ersten Bewegungskonfiguration (Fig. 1) mindestens eine erste Umlenkstelle (10) zwischen dem Polstersitzanteil (5) und dem Polsterrückenanteil (6) aufweist und in einer zweiten Bewegungskonfiguration (Fig. 2) eine im oder am Polsterrückenanteil (6) liegende zweite Umlenkstelle (11) aufweist, wobei das Polsterelement (4) in der ersten Umlenkstelle (10) in eine erste Richtung (16) umgelenkt ist und in der zweiten Umlenkstelle (11) in eine zweite entgegengesetzte Richtung (17) umlenkbar ist, wobei
der Rückenlehenrahmenbereich (3) und der Sitzflächenrahmenbereich (2) derart unbeweglich zueinander angeordnet sind, dass eine Winkelstellung des Rückenlehnenrahmenbereichs (3) relativ zu dem Sitzflächenrahmenbereich (2) konstant bleibt, selbst wenn ein Übergang von der ersten Bewegungskonfiguration in die zweite Bewegungskonfiguration durchgeführt wird, wobei
bei einer Bewegung von der ersten Bewegungskonfiguration in die zweite Bewegungskonfiguration, an der ersten Umlenkstelle (10), das Polsterelement (4) in die erste Umlenkrichtung (16) umgelenkt wird und wobei
- zur Erzeugung der ersten Umlenkstelle (10) und der zweiten Umlenkstelle (11) eine relativ zu dem Rückenlehnenrahmenbereich (3) verschiebbare Sitzschale (20) zwischen dem Polsterelement (4) und dem Sitzrahmen (1) angeordnet ist, wobei
- eine Ausdehnung der Sitzschale (20) in Höhenrichtung im Bereich der zweiten Umlenkstelle (11) endet und im Wesentlichen die Form des Polstersitzanteiles gegenüber dem Polsterrückenanteil im unteren Bereich, also bis auf Höhe eines Lendenwirbelbereiches, vorgibt, wobei
- diese Sitzschale (20) unterhalb des Polsterelementes (5) und damit unterhalb des Polstersitzanteiles angeordnet und gegenüber dem Sitzflächenrahmenbereich nach vorne und auch nach hinten verschiebbar ist, und wobei
- die zweite Umlenkstelle (1) als imaginäre oder reale Achse innerhalb des Polsterelementes bezüglich des Sitzrahmens (1) verschiebbar ist, was bedeutet, dass die Achse sich bei einem Nachvorneverschieben des Polstersitzanteiles (5) im Bereich des Polsterrückenanteiles (6) von dem Rückenlehnenrahmenbereich (3) weg nach vorne bewegt und hierdurch eine verstärkte Lordose-Stellung des Polsterelementes (4) entsteht, wobei die hierdurch entstehende Auswölbung des Polsterelementes (4) in diesem Rückenlehnenbereich zu einem nach hinten geneigten Polsterrückenanteil (6) oberhalb der zweiten Umlenkstelle (11) führt, wobei eine derartige Umlenkung eine Loslösung des Polsterelementes, insbesondere im unteren Bereich des Polsterrückenanteiles, von dem Rückenlehnenrahmenbereich (3) bewirkt, wobei sich bei einem Nachvorneziehen des Polstersitzanteiles ebenso eine Loslösung des Polsterelementes im mittleren Rückenbereich und teilweise im Schulterbereich der Rückenlehne von dem Rückenlehnenrahmenbereich ergibt, und wobei durch ein Nachvorneverschieben des Polstersitzanteiles, wie es mittels der Sitzschale (20) geschieht, in diesem Bereich der Polsterrückenanteil sich rückseitig von dem Rückenlehnenrahmenbereich (3) in seiner Kontaktierung löst und somit eine nach vorne gerichtete Auswölbung in einem Bereich (9), der auch als Lordose unterstützender Bereich (9) bezeichnet wird, entsteht, und weiter wobei durch dieses Nachvorneschieben der Sitzschale (20) oberhalb des lordoseunterstützenden Bereiches (9) hingegen durch das Nachvorneziehen des Polsterelementes in dem Sitzflächenbereich und in einem unteren Rückenlehnenbereich jedoch eine Rückenlehne mit geringerer Neigung geschaffen wird,
- und weiter aufweisend eine dritte Umlenkstelle (12), die im Polsterrückenanteil (6) liegt und um die das Polsterelement (4) in einem mit der ersten Richtung (16) übereinstimmende dritte Richtung (18) umlenkbar ist , wobei die dritte Umlenkstelle (12) im Schulterbereich des Polsterrückenanteils (6) angeordnet ist und die nach hinten gerichtete Einbuchtung des Polsterelementes im Schulterbereich oder oberhalb des Schulterbereiches wiedergibt, und weiter wobei der Polsterrückenanteil (6) für den Übergang zwischen den beiden Bewegungskonfigurationen in Höhenrichtung verschiebbar ist, wobei ein Abstand in Höhenrichtung von dem oberen Ende der Sitzschale (20), welches im Bereich der zweiten Umlenkstelle (11) liegt, zu dem unteren Ende der Sitzschale (20), an dem die Sitzschale (20) eine Umlenkung in die Horizontale erfährt, zwischen 5 cm und 50 cm, bevorzugt zwischen 10 cm und 30 cm ist, wobei die zweite Umlenkstelle (11) achsenartig durch die Oberkante der Sitzschale (20) ausgebildet ist.

## Claims

1. Vehicle seat comprising a seat frame (1) for defining a seat shape, wherein the seat frame (1) comprises at least one backrest frame region (3) and a seat base frame region (2) that is immovable with respect thereto,
wherein the vehicle seat further comprises:
a cushion element (4) which is in contact with the seat frame (1) at least in part and
comprises at least one cushion seat portion (5), which is movable relative to the seat base frame region (2) in the longitudinal seat direction (7), and a cushion back portion (6), which is movable relative to the backrest frame region (3) in the longitudinal seat direction (7) at least in part, wherein the cushion element (4) comprises, in a first movement configuration (Fig. 1), at least one first deflection point (10) between the cushion seat portion (5) and the cushion back portion (6) and, in a second movement configuration (Fig. 2), a second deflection point (11) in or on the cushion back portion (6), wherein the cushion element (4) is deflected in a first direction (16) at the first deflection point (10) and can be deflected in a second,
opposing direction (17) at the second deflection point (11), wherein
the backrest frame region (3) and the seat base frame region (2) are arranged so as to be immovable relative to one another such that an angular position of the backrest frame region (3) relative to the seat base frame region (2) remains constant, even when the first movement configuration transitions into the second movement configuration, wherein
in the event of movement from the first movement configuration into the second movement configuration, at the first deflection point (10), the cushion element (4) is deflected in the first deflection direction (16), and wherein
a seat shell (20) which is movable relative to the backrest frame region (3) is arranged between the cushion element (4) and the seat frame (1) in order to produce the first deflection point (10) and the second deflection point (11), wherein
an extension of the seat shell (20) in the height direction ends in the region of the second deflection point (11) and substantially defines the shape of the cushion seat portion with respect to the cushion back portion in the lower region, i.e. as far as a lumbar vertebrae region, wherein
said seat shell (20) is arranged underneath the cushion element (5) and thus underneath the cushion seat portion and can be moved back and forth with respect to the seat base frame region, and wherein
the second deflection point (1), as an imaginary or real axis, can be moved within the cushion element with respect to the seat frame (1), which means that the axis moves forwards away from the backrest frame region (3) when the cushion seat portion (5) is moved forwards in the region of the cushion back portion (6) and thus produces a reinforced lordosis position of the cushion element (4), wherein the bulge of the cushion element (4) thus produced in this backrest region leads to a cushion back portion (6) above the second deflection point (11) that is inclined backwards, wherein such a deflection detaches the cushion element, in particular in the lower region of the cushion back portion, from the backrest frame region (3), wherein the cushion element is likewise detached from the backrest frame region in the central back region and in part in the shoulder region of the backrest when the cushion seat portion moves forwards, and wherein due to the cushion seat portion moving forwards, which occurs by means of the seat shell (20), in this region, the cushion back portion breaks contact at the back with the backrest frame region (3), and therefore a bulge that is oriented forwards is produced in a region (9) which is referred to as a lordosis-supporting region (9), and furthermore wherein, due to this forward movement of the seat shell (20), a less inclined backrest is produced above the lordosis-supporting region (9), however, due to the cushion element being brought forward in the seat base region and in a lower backrest region,
and further comprising a third deflection point (12), which is in the cushion back portion (6) and around which the cushion element (4) can be deflected in a third direction (18) corresponding to the first direction (16), wherein the third deflection point (12) is arranged in the shoulder region of the cushion back portion (6) and reproduces the concavity, which is oriented backwards, of the cushion element in the shoulder region or above the shoulder region, and furthermore wherein the cushion back portion (6) can be moved in the height direction for transition between the two movement configurations, wherein a spacing in the height direction between the upper end of the seat shell (20), which is in the region of the second deflection point (11), and the lower end of the seat shell (20), at which the seat shell (20) is deflected to the horizontal, is between 5 cm and 50 cm, preferably between 10 cm and 30 cm, wherein the second deflection point (11) is formed as a shaft by the upper edge of the seat shell (20).

## Revendications

1. Siège de véhicule comportant un cadre de siège (1) pour définir une forme de siège, le cadre de siège (1) présentant au moins une région de cadre de dossier (3) et une région de cadre de surface d'assise (2) fixe par rapport à celle-ci,
le siège de véhicule présentant en outre :
un élément coussin (4) en contact au moins partiellement avec le cadre de siège (1), lequel présente au moins une partie assise de coussin (5), qui est déplaçable dans la direction longitudinale de siège (7) par rapport à la région de cadre de surface d'assise (2), et une partie dossier de coussin (6), qui est déplaçable au moins partiellement dans la direction longitudinale de siège (7) par rapport à la région de cadre de dossier (3), l'élément coussin (4) présentant, dans une première configuration de déplacement (Fig. 1), au moins un premier point de déviation (10) entre la partie assise de coussin (5) et la partie dossier de coussin (6) et, dans une seconde configuration de déplacement (Fig. 2), un deuxième point de déviation (11) se trouvant dans ou sur la partie dossier de coussin (6), l'élément coussin (4) étant dévié dans le premier point de déviation (10) dans une première direction (16) et étant apte à être dévié dans le second point de déviation (11) dans une seconde direction opposée (17), où
la région de cadre de dossier (3) et la région de cadre de surface d'assise (2) sont disposées fixes l'une par rapport à l'autre de telle sorte qu'une position angulaire de la région de cadre de dossier (3) reste constante par rapport à la région de cadre de surface d'assise (2), même lorsqu'un transfert de la première configuration de déplacement dans la seconde configuration de déplacement est effectué, où
lors d'un déplacement de la première configuration de déplacement dans la seconde configuration de déplacement, au premier point de déviation (10), l'élément coussin (4) est dévié dans la première direction de déviation (16), et où
pour la production du premier point de déviation (10) et du deuxième point de déviation (11), une coque de siège (20) déplaçable par rapport à la région de cadre de dossier (3) est disposée entre l'élément coussin (4) et le cadre de siège (1), où une étendue de la coque de siège (20) dans la direction de la hauteur se termine dans la région du deuxième point de déviation (11) et définit sensiblement la forme de la partie assise de coussin par rapport à la partie dossier de coussin dans la région inférieure, par conséquent jusqu'à hauteur d'une région des vertèbres lombaires , où
la coque de siège (20) est disposée au-dessous de l'élément coussin (5) et par conséquent au-dessous de la partie assise de coussin et est déplaçable par rapport à la région de cadre de surface d'assise vers l'avant et également vers l'arrière , et
où
le deuxième point de déviation (1) est déplaçable en tant qu'axe imaginaire ou réel à l'intérieur de l'élément coussin par rapport au cadre de siège (1), ce qui signifie que l'axe se déplace vers l'avant, lors d'un déplacement vers l'avant de la partie assise de coussin (5) dans la région de la partie dossier de coussin (6), loin de la région de cadre de dossier (3), et crée de cette façon une position de lordose renforcée de l'élément coussin (4), où le bombement résultant de cela de l'élément coussin (4) dans cette région de dossier conduit à une partie dossier de coussin (6) inclinée vers l'arrière au-dessus du deuxième point de déviation (11), où une telle déviation entraîne un détachement de l'élément coussin, en particulier dans la zone inférieure de la partie dossier de coussin, à partir de la région de cadre de dossier (3), où, lors d'une traction vers l'avant de la partie assise de coussin, il se produit également un détachement de l'élément coussin dans la région moyenne de dossier et partiellement dans la région d'épaule du dossier à partir de la région de cadre de dossier, et où, par un déplacement vers l'avant de la partie assise de coussin, comme cela se produit au moyen de la coque de siège (20), dans cette région la partie dossier de coussin se dégage côté arrière dans son contact de la région de cadre de dossier (3) et, par conséquent, il se produit un bombement dirigé vers l'avant dans une région (9), qui est également désignée comme région (9) de support de lordose, et en outre où, par ce déplacement vers l'avant de la coque de siège (20) au-dessus de la région (9) de support de lordose en revanche, par la traction vers l'avant de l'élément coussin dans la région de surface d'assise et dans une région de dossier inférieure, il est cependant créé un dossier avec une inclinaison plus faible,
et en outre comportant un troisième point de déviation (12), qui se situe dans la partie dossier de coussin (6) et autour duquel est apte à dévier l'élément coussin (4) dans une troisième direction (18) coïncidant avec la première direction (16), où le troisième point de déviation (12) est disposé dans la région d'épaule de la partie dossier de coussin (6) et le creux dirigé vers l'arrière de l'élément coussin se reproduit dans la région d'épaule ou au-dessus de la région d'épaule, et en outre où la partie dossier de coussin (6) est déplaçable dans la direction de la hauteur pour le transfert entre les deux configurations de déplacement, où une distance dans la direction de la hauteur de l'extrémité supérieure de la coque de siège (20), qui se trouve dans la région du deuxième point de déviation (11), à l'extrémité inférieure de la coque de siège (20) sur laquelle la coque de siège (20) subit une déviation à l'horizontale, est entre 5 cm et 50 cm, de préférence entre 10 cm et 30 cm, où le deuxième point de déviation (11) est réalisé en forme d'axe par le bord supérieur de la coque de siège (20).
